# EUROPÄISCHE PATENTSCHRIFT

(11) **EP 0 557 745 B1**
(45) Veröffentlichungstag und Bekanntmachung des Hinweises auf die Patenterteilung: **02.11.1995**
(21) Anmeldenummer: 93101602.6
(22) Anmeldetag: 03.02.1993
(51) Int. Cl.: D03D 49/02, F16B 2/14, B23Q 1/00

(54) **Geteilte Webmaschine**
Divided loom
Métier à tisser divisé

(30) Priorität: 27.02.1992 BE 9200198
(43) Veröffentlichungstag der Anmeldung: 01.09.1993
(73) Patentinhaber: Picanol N.V., 8900 Ieper (BE)
(72) Erfinder: Gruwez, Marc, B-9630 Zwalm (BE)
(74) Vertreter: Wilhelm & Dauster Patentanwälte European Patent Attorneys

(56) Entgegenhaltungen:
- AT-B- 298 032
- BE-A- 903 190
- CH-A- 668 608
- US-A- 4 500 275

## Beschreibung

Die Erfindung betrifft eine geteilte Webmaschine mit einem wenigstens Mittel zur Warenaufwickelung enthaltenden, stationären Teil eines Maschinengestells und mit einem von diesem entfernbaren, wenigstens die Lagerung für einen Kettbaum enthaltenden, zweiten Teil des Maschinengestells.

Um die Arbeiten nach dem Auslaufen eines Kettbaumes oder bei einem Wechsel des zu verarbeitenden Materials und/oder des zu erzeugenden Gewebes nicht mit den beengten Bedingungen innerhalb des Webmaschinensaales ausführen zu müssen, ist es bekannt (CH 668 608 A5), entweder die gesamte Webmaschine mittels eines Brückenkranes zu einem anderen Arbeitbereich zu transportieren, oder die Webmaschine in zwei Teile zu unterteilen und nur einen dieser Teile in den anderen Arbeitsbereich zu transportieren. Bei dieser Bauart wird ein stationärer Teil vorgesehen, der einen Schaftantrieb, einen Ladenantrieb, einen Antrieb für eine Abzugseinrichtung und eine vollständige Warenwickeleinrichtung enthält. Der entfernbare Teil des Maschinengestells enthält einen Kettbaum mit zugehörigem Antrieb, eine Schafteinrichtung, eine Weblade und eine Abzugseinrichtung für die fertige Ware. Bei einem Trennen der beiden Teile werden die Verbindungen zwischen der Schafteinrichtung, der Weblade und der Abzugseinrichtung zu den jeweiligen Antrieben getrennt, die dann beim Zurückbringen des entfernbaren Teils wieder hergestellt werden müssen.

Die beiden Webmaschinenteile müssen sehr fest miteinander verbunden werden, da die Webmaschine während des Betriebes vibriert. Eine derartige Verbindung der beiden Webmaschinenteile ist mittels Schraubverbindungen möglich. Hierzu ist es jedoch erforderlich, daß die Schraublöcher der beiden Webmaschinenteile bei dem Zusammenfügen sehr genau zueinander ausgerichtet werden. Außerdem ist eine Vielzahl von Schrauben erforderlich, die dann teilweise nur schlecht zugänglich angeordnet sind. Ein derartiges Verbinden der beiden Webmaschinenteile erfordert deshalb eine zeitaufwendige, umständliche Arbeitsweise während des Entfernen des entfernbaren Webmaschinenteils und des Wiederzusammenfügens.

Der Erfindung liegt die Aufgabe zugrunde, eine Webmaschine der eingangs genannten Art so auszubilden, daß die Arbeiten beim Entfernen und Wiederzusammenfügen der beiden Webmaschinenteile einfach und schnell ausführbar sind, jedoch die Webmaschinenteile exakt zueinander ausgerichtet werden.

Diese Aufgabe wird dadurch gelöst, daß beide Teile des Maschinengestells Seitenteile besitzen, die mit einander zugeordneten Abstützungen und mit einander zugeordneten Anschlagflächen versehen sind, und daß Spannkeile enthaltende Spannvorrichtungen für jede Maschinenseite vorgesehen sind, mittels welcher die Anschlagflächen der Seitenteile aneinander anpreßbar sind.

Durch die Erfindung wird der Vorteil erhalten, daß beim Zusammenfügen oder Lösen der beiden Maschinenteile nur wenige Elemente zu betätigen sind, die gut zugänglich angeordnet werden können. Insbesondere ergibt sich der Vorteil, daß die Bewegung beim Zusammenfügen der sehr schweren Maschinenteile keine allzu hohen Genauigkeiten erfordern, da aufgrund der Spannvorrichtungen eine Selbstausrichtung verwirklicht wird.

In Ausgestaltung der Erfindung wird vorgesehen, daß für die oberhalb und unterhalb der Anschlagflächen angeordneten Spannkeile ein gemeinsamen Spannelement vorgesehen ist, das im wesentlichen parallel zur Anschlagfläche verläuft und an der Oberseite eines der Seitenteile zugänglich ist. Dadurch genügt für jede Maschinenseite nur ein Spannelement, das gut zugänglich angeordnet ist.

In weiterer Ausgestaltung der Erfindung wird vorgesehen, daß das stationäre Seitenteil mit zwei hakenörmig nach oben gerichteten Keilelementen und das bewegliche Seitenteil mit zwei hakenförmigen nach unten gerichteten Keilelementen versehen ist, wobei jedes Seitenteil ein bewegliches und ein stationäres Keilelement aufweist. Dadurch ist es möglich, die beiden Maschinenteile mittels einer vertikalen Bewegung so weit zusammenzufügen, daß die Keilelemente miteinander in Eingriff gebracht werden können, wonach das endgültige Ausrichten dann durch Verspannen der Keilelemente erfolgt. Ebenso wird dadurch erreicht, daß die beiden Maschinenteile durch eine zunächst vertikale Bewegung voneinander gelöst werden können. Die Erfindung ist in den Ansprüchen 1-9 beansprucht.

Weitere Merkmale und Vorteile der Erfindung ergeben sich aus der nachfolgenden Beschreibung des in der Zeichnung dargestellten Ausführungsbeispiels.
- Fig. 1: zeigt eine Teil-Seitenansicht einer erfindungsgemäßen Webmaschine im Bereich der Trennstelle zwischen den beiden Teilen während eines Zusammenfügens,
- Fig. 2: eine Seitenansicht entsprechend Fig. 1 nach dem Zusammenfügen,
- Fig. 3 bis 5: Seitenansichten einer Spannkeile enthaltenden Spannvorrichtung zum Anpressen von vertikalen Anschlagflächen während des Zusammenfügens der beiden Webmaschinenteile,
- Fig. 6: einen Schnitt entlang der Linie VI-VI der Fig. 5,
- Fig. 7: einen Schnitt entlang der Linie VII-VII der Fig. 5 und
- Fig. 8: einen Schnitt entlang der Linie VIII-VIII der Fig. 7.

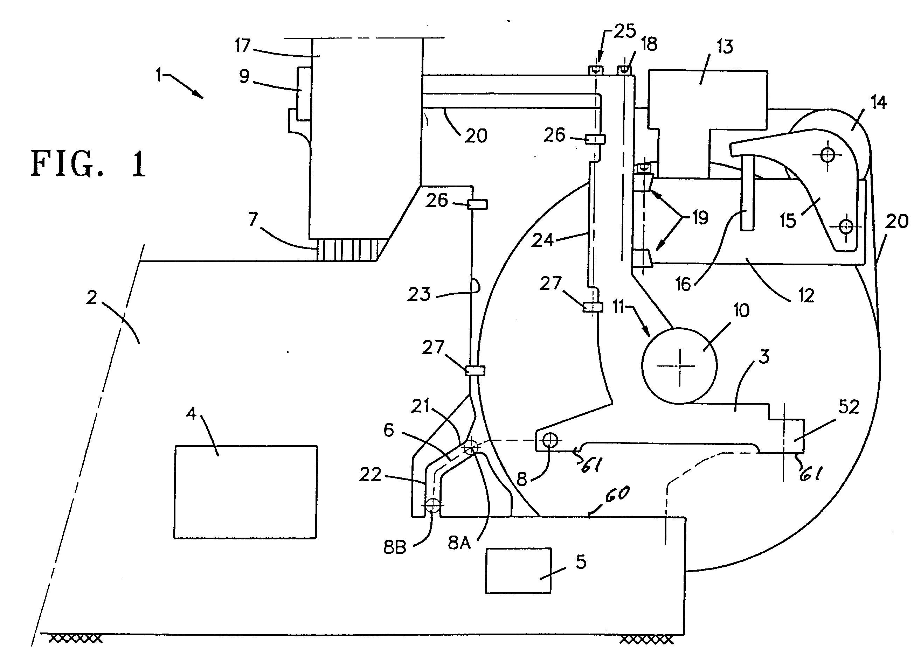

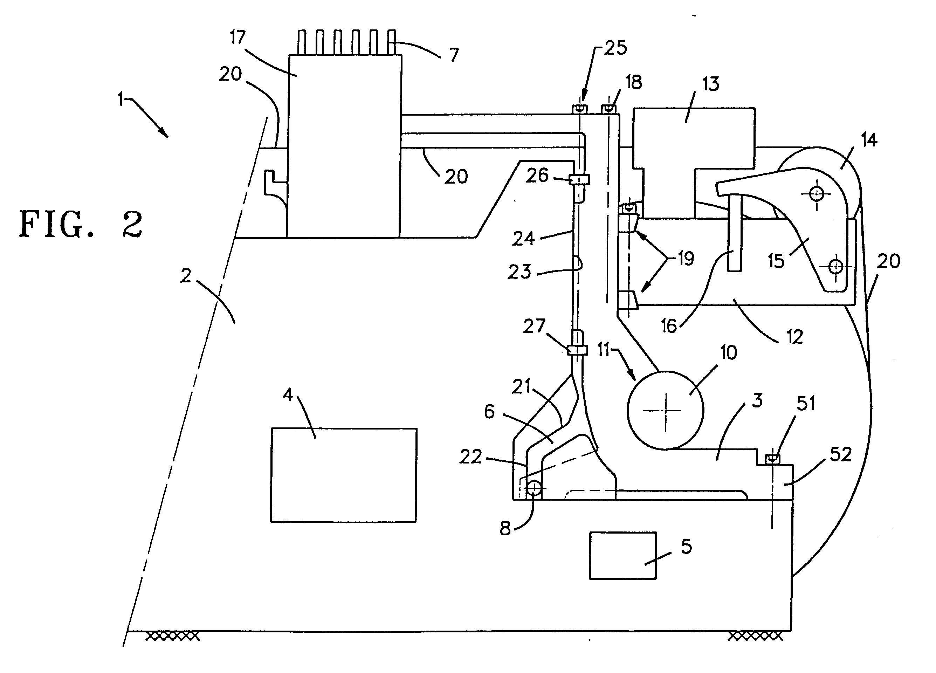

Die in Fig. 1 und 2 dargestellte Webmaschine (1) besitzt einen stationären Webmaschinenteil, dessen Maschinengestell zwei stationär angeordnete, plattenförmige Seitenteile (2) aufweist, die durch mehrere Querstreben o.dgl. miteinander verbunden sind. Ferner enthält die Webmaschine (1) einen entfernbaren Webmaschinenteil, der ebenfalls zwei plattenförmige Seitenteile (3) aufweist, die durch wenigstens eine Querstrebe miteinander verbunden sind. Der die plattenförmigen Seitenteile (2) besitzende Teil des Maschinengestells enthält ein nicht dargestelltes Webladenantriebssystem, ein Warenaufwickelsystem, einen schematisch dargestellten Schaftantrieb (4) und einen Kettbaumantrieb (5). Der die Seitenteile (3) besitzende Teil des Maschinengestells nimmt unter anderem eine Lagerung (11) für einen Kettbaum (10) auf sowie an einem im wesentlichen vertikalen Schenkel eine mittels einer Verstelleinrichtung (18, 19) höhenverstellbare Stütze (12). Diese Stütze (12) trägt eine an ihr mittels einer Schwinge (15) gehaltene Umlenkrolle (14) für die Kettfäden (20). Die Schwinge (15) ist mittels einer Feder (16) abgestützt.An dieser Stütze (12) sind außerdem Kettfadenwächter (13) angebracht. An wesentlichen horizontalen, über den stationären Maschinenteil ragenden Kragarm an dem Seitenteil (3) sind außerdem Schaftführungen (17) für Schäfte (7) angebracht. Die Schaftführungen (17) sind außerdem noch mit einem Halter versehen, der eine von dem Webladenantriebssystem gelöste Weblade (9) aufnimmt.

Die stationären Seitenteile (2) und die entfernbaren Seitenteile (3) sind mit horizontalen Abstützflächen (60, 61) und vertikalen Anschlagflächen (23, 24) versehen, an denen die Seitenteile (2, 3) in der Betriebsposition fest miteinander verbunden sind. Die horizontalen Abstützflächen (61) sind durch eine Aussparung in zwei Abschnitte unterteilt. Es wird angemerkt, daß die Abstützflächen (60, 61) und die Anschlagflächen (23, 24) nicht unbedingt horizontal oder vertikal verlaufen müssen, um ihre Funktion zu erfüllen. Anstelle von Abstützflächen wird bei einer abgewandelten Ausführungsform vorgesehen, daß die Fußteile der Seitenteile (3) nur mit einer vorzugsweise abgerundeten Abstützrippe versehen sind.

Beim Zusammenfügen der Seitenteile (2, 3) und auch während des Entfernens der Seitenteile (2, 3) voneinander ist für den Bereich der Bewegung, in welchem der Kettbaum (10) und die Schäfte (7) in den stationären Maschinenteil eintauchen,eine Zwangsführung vorgesehen, so daß der entfernbare Teil eine definierte Zustell- oder Entfernungsbewegung ausführen muß. Hierzu sind an den stationären Seitenteilen (2) plattenförmige Führungselemente vorgesehen, die eine Führungsnut (6) für Zapfen (8) der Seitenteile (3) festlegen. Die Führungsnut (6) besitzt einen ersten schräg nach unten laufenden Abschnitt (21) und einen anschließenden parallel zu den Anschlagflächen (23) verlaufenden Abschnitt (22). Die Zapfen (8) nehmen beim Zusammenfügen nacheinander die Positionen (8A) und (8B) ein. Am Ende der Zusammenfügungsbewegung stützen sich die Abstützflächen (61) der Seitenteile (3) auf den Abstützflächen (60) der Seitenteile (2) ab, während die Anschlagflächen (23, 24) dieser Seitenteile (2 und 3) sich noch in einem (geringem) Abstand zueinander befinden. Das Spiel zwischen den Zapfen (8) und den Nuten (6) entspricht wenigstens diesem Abstand.

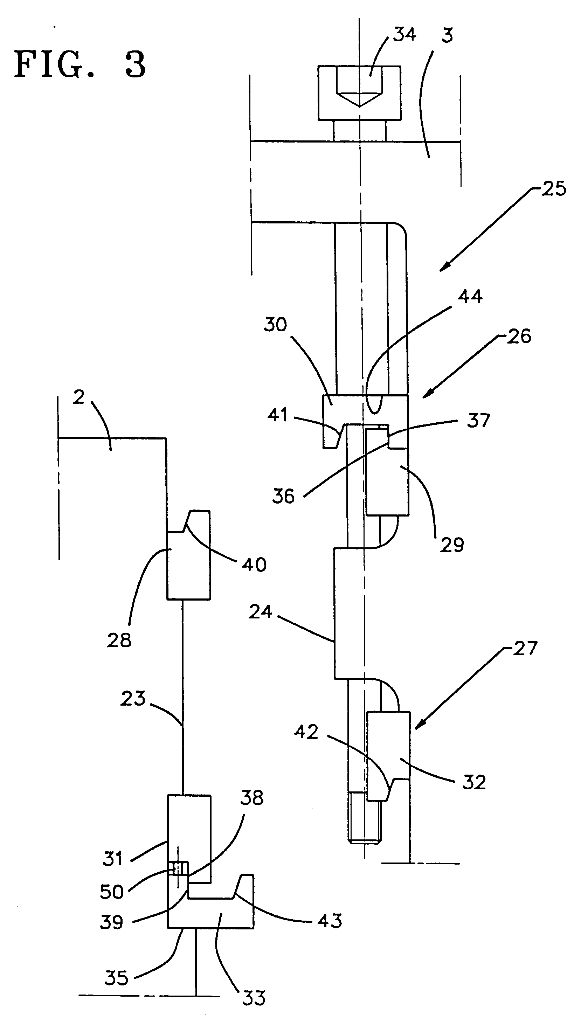

Die endgültige Position, in welcher die Anschlagflächen (23, 24) der Seitenteile (2, 3) gegeneinander angepreßt sind, wird mittels einer Spanneinrichtung (25) erreicht, durch deren Betätigen die Seitenteile (2, 3) aneinander herangezogen und mit ihren Anschlagflächen (23, 24) aneinandergepreßt werden. Die Spanneinrichtung (25), die anhand von Fig. 3 bis 8 noch im einzelnen erläutert werden wird, besitzt Spannkeile (26, 27), die oberhalb und unterhalb der Anschlagfläche (24) angeordnet sind. Nachdem die Anschlagflächen (23, 24) der Seitenteile (2, 3) aneinander angepreßt worden sind, wird zusätzlich das Fußteil (52), das mit seiner aus zwei Abständen gebildeten Abstützfläche (61) auf der Abstützfläche (60) der Seitenteile (3) aufsteht, an dem der Spanneinrichtung (25) abgewandten Seite mittels einer Schraube (51) an dem Seitenteil (2) befestigt.

Die Seitenteile (2) sind im Bereich ihrer Anschlagfläche (23) mit zwei hakenförmig nach oben weisenden Keilelementen (28, 33) versehen. Die Seitenteile (3) sind mit hakenförmig nach unten weisenden Keilelementen (30, 32) versehen, so daß die Keilelemente (28 und 30) sowie die Keilelemente (32 und 33) durch eine Vertikalbewegung des Seitenteils (3) beim Zusammenfügen in Eingriff bringbar sind und bei einer Vertikalbewegung beim Entfernen außer Eingriff bringbar sind.

Das Keilelement (28) ist stationär mittels Schrauben (46) an dem Seitenteil (2) befestigt. Es besitzt eine schräg nach oben und außen laufende Keilfläche (40). Das Keilelement (33), das ebenfalls eine schräg nach oben und außen laufende Keilfläche (43) aufweist, ist in Richtung der Anschlagfläche (23) beweglich an dem Seitenteil (2) befestigt. An dem Seitenteil (2) ist mittels Schrauben ein Führungselement (31) befestigt, das mit einer Aussparung (38) versehen ist, die zusammen mit einer Wand des Seitenteils (2) eine Führung für einen Steg (39) des Keilelementes (33) bildet. Die Bewegung in Richtung der Anschlagfläche (23) wird durch einen Absatz (35) des Seitenteils (2) begrenzt. Ein seitliches Verschieben des Keilelementes (33) bezüglich des Führungselementes (31) wird mittels einer Stiftführung (50) verhindert.

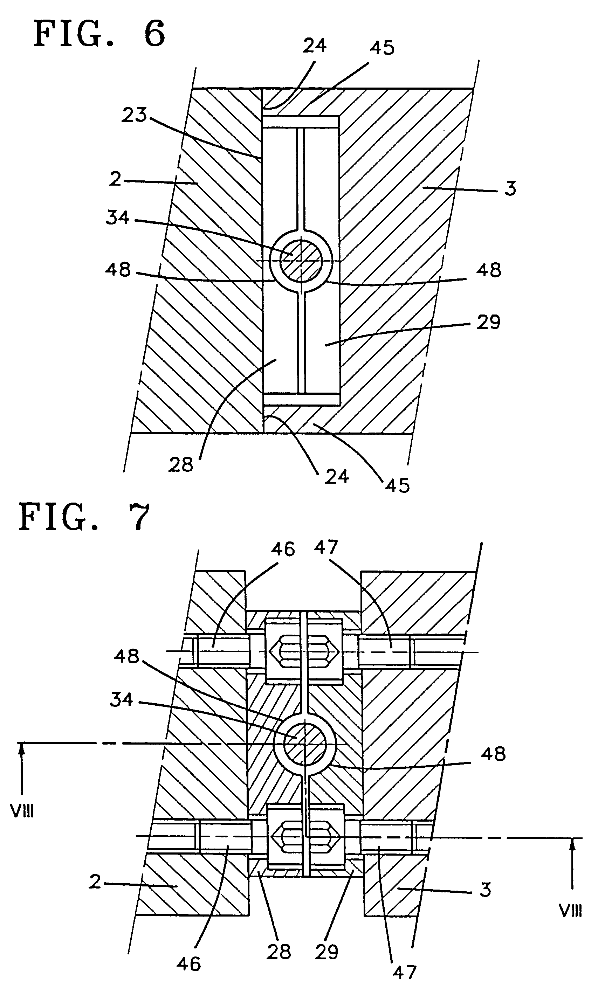

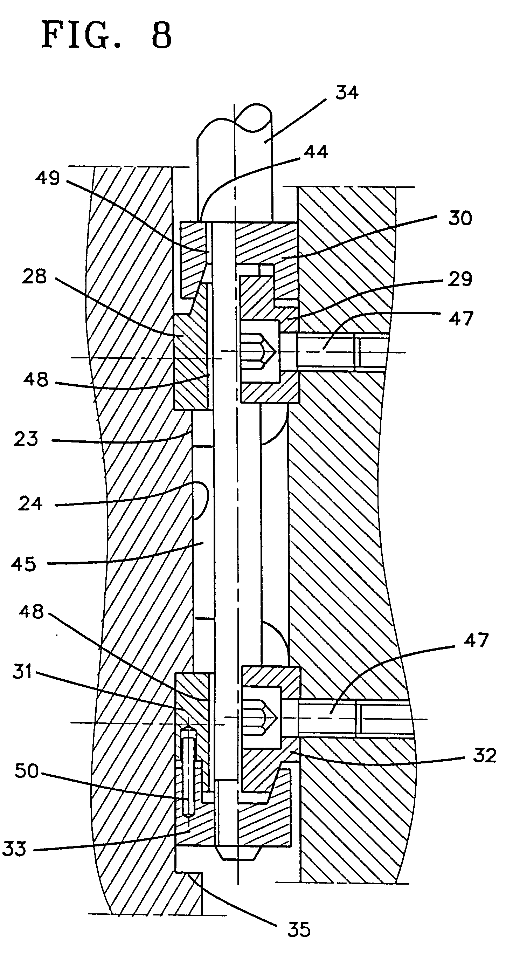

Das Keilelement (32) ist mittels Schrauben (47), die in Fig. 7 und 8 dargestellt sind, stationär an dem Seitenteil (3) befestigt. Es weist eine nach unten gerichtete, gegenüber der Anschlagfläche (24) geneigte Keilfläche (42) auf. Das Keilelement (30), das ebenfalls eine nach unten weisende und zur Anschlagfläche (24) geneigte Keilfläche (41) aufweist, ist in Richtung der Anschlagfläche (24) beweglich an dem Seitenteil (3) befestigt. An dem Seitenteil (3) ist mittels Schrauben (47), die in Fig. 8 dargestellt sind, ein Führungselement (29) befestigt, das eine Aussparung (36) aufweist, die zusammen mit einer Wand des Seitenteils (3) eine Führung für einen Steg (37) des Keilelementes (30) bildet.

Die beiden beweglichen Keilelemente (30 und 33) können mittels einer gemeinsamen Schraube (34) aufeinander zubewegt werden. Die Schraube (34), die parallel zu den Anschlagflächen (23, 24) verläuft, ist in einer Durchgangsbohrung des Seitenteils (3) derart geführt, daß ihr Kopf auf der Oberseite dieses Seitenteils (3) zugänglich ist. Die Schraube (34) durchdringt das Keilelement (30) in einer Durchgangsbohrung (49). Das Keilelement (33) ist mit einer Gewindebohrung versehen, in die die Schraube (3) einschraubbar ist (Fig. 8). Auf der oberen Außenseite des Keilelementes (30) ist die Schraube (34) mit einem einen größeren Durchmesser aufweisenden Ringbund (44) versehen. Die stationären Keilelemente (28, 32) sowie die stationären Führungselemente (31, 29) sind mit Führungsnuten (48) versehen, die die Bewegungsmöglichkeit der Schraube (34) in Querrichtung beschränken.

Die Anschlagfläche (24) des Seitenteils (3) ist (Fig. 6) mit einer Aussparung versehen, so daß die Anschlagfläche (24) zwei parallele Abschnitte aufweist, die von Stegen (45) gebildet werden. Der Abstand der Stege (45) ist größer als die Breite der Keilelemente (28, 30, 32, 33) und der Führungselemente (29, 31),so daß die Vertikalbewegung des Seitenteils (3) nicht durch die Spannvorrichtung (25) behindert ist.

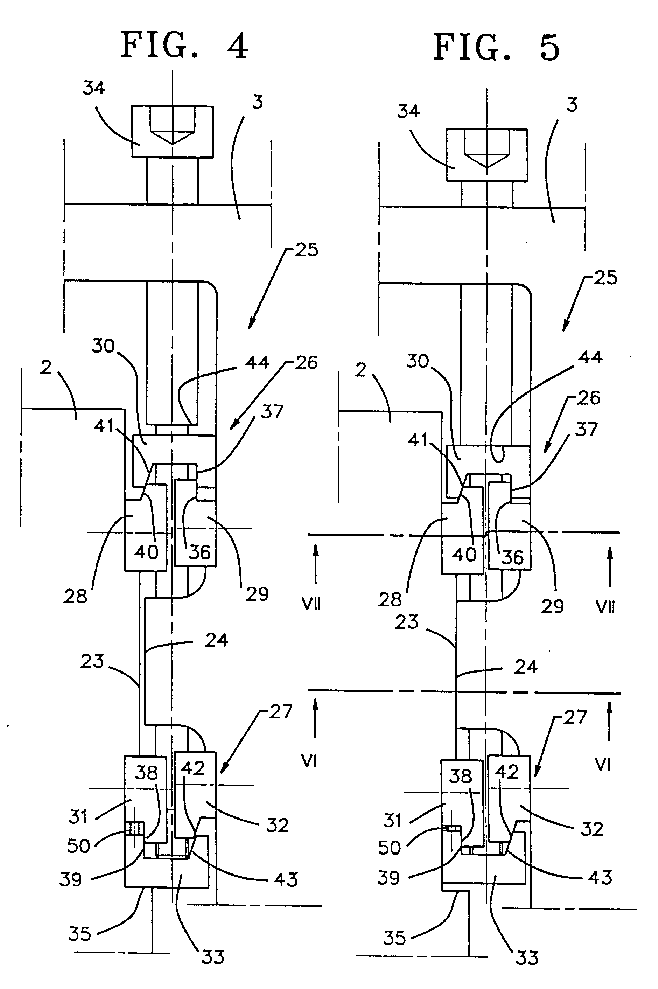

Bei der Zustellbewegung für ein Zusammenfügen der Seitenteile (2, 3) befinden sich die Elemente der Spannvorrichtung (25) zunächst in der in Fig. 3 dargestellten Position. Aufgrund der Führungsnut (6) und der Zapfen (8) erfolgt der letzte Bereich der Zusammenfügbewegung im wesentlichen vertikal parallel zu den Anschlagflächen (23, 24). Wenn die Abstützflächen (61) der Seitenteile (3) an den Abstützflächen (60) der Seitenteile (2) anliegen, befinden sich die Anschlagflächen (23, 24) und die Spanneinrichtung (25) in der in Fig. 4 dargestellten Position. Die Anschlagflächen (23, 24) weisen dabei in horizontaler Richtung noch einen (geringen) Abstand auf.Die Schraube (34) stützt sich auf dem Keilelement (33) ab, so daß sie gegenüber ihrer Stellung nach Fig. 3 angehoben wurde. Das Keilelement (30) hat sich mit seiner Keilfläche (41) an die Keilfläche (40) des Keilelementes (28) angelegt. Das Keilelement (32) ist mit seiner Keilfläche (42) der Keilfläche (43) des Keilelementes (33) zugestellt worden. In dieser Position wird die Schraube (34) in die Gewindebohrung des Keilelementes (33) eingeschraubt. Aufgrund des Einschraubens der Schraube (34) werden die beweglichen Keilelemente (30, 33) gegensinnig bewegt. Das Keilelement (33) wird nach oben gezogen, während das Keilelement (30) mittels des Ringbundes (44) der Schraube (34) nach unten gedrückt wird. Dabei gleiten die Keilflächen (40, 41) und (42, 43), die zu den Anschlagflächen (23, 24) einen Keilwinkel von etwa 20° aufweisen, aneinander und ziehen die Anschlagfläche (24) gegen die Anschlagfläche (23). Durch ein entsprechend festes Anziehen der Schrauben (34) wird eine sehr sichere Verbindung zwischen den Seitenteilen (2 und 3) im Bereich der Anschlagflächen (23, 24) erhalten.

Um die Seitenteile (2, 3) wieder voneinander lösen zu können, werden die Schrauben (34) aus den Keilelementen (33) herausgeschraubt, so daß anschließend der Teil der Webmaschine mit den Seitenteilen (3) entsprechend der vorgegebenen Führungsbahn entfernt werden kann.

Die vorstehend beschriebene Verspannung der Seitenteile (2, 3) bietet den Vorteil, daß diese Seitenteile (2, 3) unter einem korrekten Winkel zueinander angeordnet sind. Dies ist besonders vorteilhaft, wenn, wie bei der dargestellten Ausführungsform, die Schaftführungen (17) von den Seitenteilen (3) des entfernbaren Teils des Maschinengestells gehalten werden, während der Schaftantrieb (4) in dem feststehenden Teil der Webmaschine untergebracht ist. Dabei wird diese Verbindung mit hoher Genauigkeit hergestellt, obwohl verhältnismäßig große Toleranzen für die Anordnung der Keilelemente (28, 30, 32, 33) zugelassen werden können. Auch ist eine vorher exakte und parallele Ausrichtung der Anschlagflächen (23, 24) bei dem Zusammenfügen der Webmaschinenteile nicht erforderlich, da dieses Ausrichten selbsttätig bei dem Schließen der Spanneinrichtungen (25) erfolgt. Ebenso ist es ein Vorteil, daß jeweils nur eine Schraube (34) für die Spanneinrichtung (25) notwendig ist, deren Schraubenkopf sich darüber hinaus an einer gut zugänglichen Stelle befindet, nämlich auf der Oberseite der Seitenteile (3).

Bei einer abgewandelten Ausführungsform wird vorgesehen, daß eine Schraube mit zwei gegenläufigen Gewindeabschnitten vorgesehen ist, wobei dann das Keilelement (30) auf einem dieser gegenläufigen Gewindeabschnitte angeordnet ist. Auch auf diese Weise ist es möglich, eine gegenläufige Bewegung für die beiden Keilelemente (30, 33) zu erhalten. Darüber hinaus ist es auch möglich, die Führung für die beweglichen Keilelemente (30, 33) abzuändern und beispielsweise im Bereich der Führungsnuten Keilflächen vorzusehen.

## Patentansprüche

1. Geteilte Webmaschine mit einem wenigstens Mittel zur Warenaufwicklung enthaltenden, stationären Teil eines Maschinengestells und mit einem von diesem entfernbaren, wenigstens die Lagerung (11) für einen Kettbaum (10) enthaltenden zweiten Teil des Maschinengestells, dadurch gekennzeichnet, daß beide Teile des Maschinengestells Seitenteile (2, 3) besitzen, die mit einander zugeordneten Abstützungen (60,61) und mit einander zugeordneten Anschlagflächen (23, 24) versehen sind, und daß Spannkeile (26,27) enthaltende Spannvorrichtungen (25) für jede Maschinenseite vorgesehen sind, mittels welcher die Anschlagflächen (23, 24) der Seitenteile (2, 3) aneinander anpreßbar sind.

2. Webmaschine nach Anspruch 1, dadurch gekennzeichnet, daß oberhalb und unterhalb der im wesentlichen vertikalen Anschlagflächen (23, 24) Spannkeile (26, 27) angeordnet sind.

3. Webmaschine nach Anspruch 1 oder 2, dadurch gekennzeichnet, daß für die oberhalb und unterhalb der Anschlagflächen (23, 24) angeordneten Spannkeile (26, 27) ein gemeinsames Spannelement (34) vorgesehen ist, das im wesentlichen parallel zu den Anschlagflächen (23, 24) verläuft und an der Oberseite eines der Seitenteile (3) zugänglich ist.

4. Webmaschine nach einem der Ansprüche 1 bis 3, dadurch gekennzeichnet, daß die Spannkeile (26, 27) jeweils aus einem Paar von Keilelementen (28, 30; 32, 33) gebildet sind, von denen jeweils ein Keilelement (28, 32) stationär an einem Seitenteil (2, 3) und das andere Keilelement (30, 33) parallel zur Anschlagfläche (23, 24) beweglich an dem anderen Seitenteil (2, 3) gehalten ist.

5. Webmaschine nach einem der Ansprüche 1 bis 4, dadurch gekennzeichnet, daß das stationäre Seitenteil (2) mit zwei hakenförmig nach oben gerichteten Keilelementen (28, 39) und das entfernbare Seitenteil (3) mit zwei hakenförmig nach unten gerichteten Keilelementen (30, 32) versehen ist, wobei jedes Seitenteil (2, 3) ein bewegliches und ein stationäres Keilelement aufweist.

6. Webmaschine nach einem der Ansprüche 1 bis 5, dadurch gekennzeichnet, daß die beweglichen Keilelemente (30, 33) mittels eines gemeinsamen Spannelementes (34) aufeinander zubewegbar sind.

7. Webmaschine nach einem der Ansprüche 1 bis 6, dadurch gekennzeichnet, daß die Anschlagflächen (24) eines der Seitenteile (3) mit einer Aussparung versehen ist, die breiter als die Breite der Keilelemente (28, 30, 32, 33) ist.

8. Webmaschine nach einem der Ansprüche 1 bis 7, dadurch gekennzeichnet, daß als Spannelement jeweils eine in einem Kragarm der entfernbaren Seitenteile (3) geführte Schraube (34) vorgesehen ist, die in das untere, bewegliche Keilelement (33) der stationäre Seitenteile (2) einschraubbar ist, die das bewegliche Keilelement (30) der entfernbaren Seitenteile (3) durchdringt und die mit einem diesem Keilelement (30) zugeordneten Ringbund (44) versehen ist.

9. Webmaschine nach einem der Ansprüche 1 bis 8, dadurch gekennzeichnet, daß wenigstens die stationär angebrachten Keilelemente (28, 32) mit einer Führungsnut (48) für die Schraube (34) versehen sind.

## Claims

1. A split weaving machine with a stationary part of a machine frame and containing at least means for cloth take-up and with a second part of the machine frame adapted to be removed from this latter and comprising at least the mounting (11) for a warp beam (10), characterised in that both parts of the machine frame have side parts (2, 3) which are provided with mutually associated supporting members (60, 61) and with mutually associated abutment surfaces (23, 24) and in that for each machine side there are clamping devices (25) comprising clamping wedges (26, 27) by means of which the abutment surfaces (23, 24) of the side parts (2, 3) are pressed against each other.

2. A weaving machine according to claim 1, characterised in that there are clamping wedges (26, 27) above and below the substantially vertical abutment surfaces (23, 24).

3. A weaving machine according to claim 1 or 2, characterised in that for the clamping wedges (26, 27) disposed above and below the abutment surfaces (23, 24) there is a common clamping element (34) which extends substantially parallel with the abutment surfaces (23, 24) and which is accessible at the top of one of the side parts (3).

4. A weaving machine according to one of claims 1 to 3, characterised in that the clamping wedges (26. 27) are in each case formed by a pair of wedge elements (28, 30; 32, 33) of which in each case one wedge element (28, 32) is maintained stationary on one side part (2, 3) while the other wedge element (30, 33) is supported for movement on the other side part (2, 3) and parallel with the abutment surface (23, 24).

5. A weaving machine according to one of claims 1 to 4, characterised in that the stationary side part (2) has two wedge elements (28, 39) directed upwardly in a hook shape while the removable side part (3) is provided with two wedge elements (30, 32) which are directed downwardly in a hook shape, each side part (2, 3) comprising one movable and one stationary wedge element.

6. A weaving machine according to one of claims 1 to 5, characterised in that the movable wedge elements (30, 33) are adapted to be moved towards each other by means of a common clamping element (34).

7. A weaving machine according to one of claims 1 to 6, characterised in that the abutment surfaces (24) of one of the side parts (3) are provided with a recess which is wider than the width of the wedge elements (28, 30; 32, 33).

8. A weaving machine according to one of claims 1 to 7, characterised in that as a clamping element there is at least one screw (34) which is guided in a bracket on the removable side parts (3) and which can be screwed into the lower movable wedge element (33) of the stationary side parts (2), said screw passing through the movable wedge element (30) of the removable side parts (3) and having an annular collar (44) associated with this wedge element (30).

9. A weaving machine according to one of claims 1 to 8, characterised in that at least the wedge elements (28, 32) which are mounted in a stationary manner are provided with a guide groove (48) for the screw (34).

## Revendications

1. Machine à tisser divisée, avec une partie fixe d'un bâti de machine, partie contenant au moins des moyens pour l'enroulement du tissu, et comportant une deuxième partie du bâti de la machine, pouvant être éloignée de la première, et contenant au moins le support (11) d'une ensouple (10), caractérisée en ce que les deux parties du bâti de machine possèdent des parties latérales (2, 3), qui sont pourvues d'appuis (60, 61) correspondant l'un à l'autre et de surfaces de butée (23, 24) correspondant l'une à l'autre, et que l'on prévoit des dispositifs de serrage (25) contenant des cales de serrage (26, 27) pour chaque côté de la machine, à l'aide desquels les surfaces de butée (23, 24) des parties latérales (2, 3) peuvent être appuyées l'une contre l'autre.

2. Machine à tisser selon la revendication 1, caractérisée en ce que des cales de serrage (26, 27) sont disposées au-dessus et au-dessous des surfaces de butée (23, 24) essentiellement verticales.

3. Machine à tisser selon la revendication 1 ou 2, caractérisée en ce que l'on prévoit, pour les cales de serrage (26, 27) disposées au-dessus et au-dessous des surfaces de butée (23, 24), un élément de serrage commun (34), qui est essentiellement parallèle aux surfaces de butée (23, 24) et est accessible sur le côté supérieur de l'une des parties latérales (3).

4. Machine à tisser selon l'une des revendications 1 à 3, caractérisée en ce que les cales de serrage (26, 27) sont chacune formées d'une paire d'éléments de cale (28, 30 ; 32, 33), parmi lesquels un élément de cale (28, 32) est maintenu fixe contre une partie latérale (2, 3), et l'autre élément de cale (30, 33) est maintenu parallèle à la surface de butée (23, 24) en pouvant se déplacer contre l'autre partie latérale (2, 3).

5. Machine à tisser selon l'une des revendications 1 à 4, caractérisée en ce que la partie latérale fixe (2) est pourvue de deux éléments de cale (28, 29) en forme de crochet et dirigés vers le haut, et que la partie latérale mobile (3) est pourvue de deux éléments de cale (30, 32) en forme de crochet, dirigés vers le bas, chaque partie latérale (2, 3) comportant un élément de cale mobile et un élément de cale fixe.

6. Machine à tisser selon l'une des revendications 1 à 5, caractérisée en ce que les éléments de cale mobiles (30, 33) peuvent se rapprocher l'un de l'autre à l'aide d'un élément de serrage commun (34).

7. Machine à tisser selon l'une des revendications 1 à 6, caractérisée en ce que les surfaces de butée (24) de l'une des parties latérales (3) est pourvue d'un évidement qui est plus large que la largeur des éléments de cale (28, 30, 32, 33).

8. Machine à tisser selon l'une des revendications 1 à 7, caractérisée en ce qu'on prévoit comme élément de serrage, dans chaque cas, une vis (34) guidée dans un bras en porte-à-faux des parties latérales mobiles (3), vis qui peut être introduite par vissage dans l'élément de cale inférieur mobile (33) des parties latérales fixes (2), élément de cale qui traverse l'élément de cale mobile (30) des parties latérales mobiles (3) et est pourvu d'une collerette annulaire (44) affectée à cet élément de cale (30).

9. Machine à tisser selon l'une des revendications 1 à 8, caractérisée en ce qu'au moins les éléments de cale rapportés en position fixe (28, 32) sont pourvus d'une rainure de guidage (48) pour la vis (34).
